# EUROPÄISCHE PATENTSCHRIFT

(11) **EP 1 651 381 B1**
(45) Veröffentlichungstag und Bekanntmachung des Hinweises auf die Patenterteilung: **17.01.2007**
(21) Anmeldenummer: 04734655.6
(22) Anmeldetag: 25.05.2004
(51) Int. Cl.: B23Q 1/62, B23Q 1/48, B23Q 39/02

(54) **WERKZEUGMASCHINE MIT EINSPANNVORRICHTUNG AUF BEIDEN SEITEN**
MACHINE TOOL COMPRISING A CLAMPING DEVICE ON BOTH SIDES
MACHINE-OUTIL AVEC SYSTEME DE FIXATION DES DEUX COTES

(30) Priorität: 04.06.2003 EP 03405405
(43) Veröffentlichungstag der Anmeldung: 03.05.2006
(73) Patentinhaber: GÜDEL GROUP AG, 4900 Langenthal (CH)
(72) Erfinder: KURT, Hans, Ulrich, CH-4566 Kriegstetten (CH); HEID, Rudolf, CH-4542 Luterbach (CH); WIRZ, Herbert, CH-4528 Zuchwil (CH)
(74) Vertreter: Roshardt, Werner Alfred
(86) Internationale Anmeldenummer: PCT/CH2004/000315
(87) Internationale Veröffentlichungsnummer: WO 2004/108349

(56) Entgegenhaltungen:
- EP-A- 1 055 485
- WO-A-02/094500
- DE-U- 29 801 236
- US-A- 4 984 351
- US-B1- 6 233 810

## Beschreibung

### Technisches Gebiet

Die Erfindung betrifft eine Werkzeugmaschine nach dem Oberbegriff von Anspruch 1 mit einem Maschinenturm, der entlang einer geraden Bahn linear verschiebbar ist, mit einem Werkzeugkopf, der am Maschinenturm angeordnet ist und ein Werkzeug zur Bearbeitung von Werkstücken aufweist, und mit mindestens zwei Einspannvorrichtungen für mindestens zwei Werkstücke. Die Erfindung betrifft weiter ein Verfahren nach dem Oberbegriff von Anspruch 7 zum Bearbeiten von mindestens zwei Werkstücken mit einer Werkzeugmaschine, die entlang einer geraden Bahn verschiebbar ist.

### Stand der Technik

Mit einer Werkzeugmaschine werden in der Regel nacheinander mehrere Werkstücke bearbeitet. Nachdem an einem ersten Werkstück sämtliche Bearbeitungsschritte durchgeführt worden sind, wird es aus einer Einspannvorrichtung entfernt, die die Werkstücke so hält, dass sie von der Werkzeugmaschine bearbeitet werden können. Dann wird ein neues zu bearbeitendes Werkstück in die Einspannvorrichtung eingespannt, wonach dessen Bearbeitung beginnen kann. Die Auswechslung der Werkstücke führt zu einer gewissen Stillstandszeit, in welcher die Werkzeugmaschine keine Bearbeitung ausführen kann. Besonders bei ausgedehnten oder schweren Werkstücken sowie bei Bearbeitungsarten, die eine aufwändige Einspannung bedingen, kann die Stillstandszeit beträchtlich sein und die Kapazität der Werkzeugmaschine stark vermindern.

Die US 4,984,351 (Brother) zeigt eine entlang einer geraden Bahn linear verschiebbare Werkzeugmaschine mit einer vertikal beweglichen Spindel. Entlang der einen Seite der Bahn sind nebeneinander mindestens zwei Tische angeordnet, welche unabhängig voneinander rechtwinklig zur Bahn horizontal verschiebbar sind. Auf den Tischen können gemeinsam ein grosses oder einzeln mehrere kleine Werkstücke befestigt werden. Werden kleinere Werkstücke bearbeitet, erlauben die Tische ein Beladen eines Tisches, während ein Werkstück auf einem anderen Tisch gerade bearbeitet wird. Die Stillstandszeit kann dadurch minimiert werden.

Falls ausgedehnte Werkstücke, z. B. lange Werkstücke, die mit ihrer grössten Ausdehnung parallel zur geraden Bahn eingespannt werden müssen, bearbeitet werden sollen, werden sämtliche Tische zur Befestigung eines solchen Werkstücks eingesetzt. In diesem Fall kommt es beim Auswechseln des aktuellen Werkstücks durch ein nächstes zu den üblichen Stillstandszeiten.

Die DE 298 01 236 U (DS Technologie Werkzeugmaschinen GmbH) beschreibt eine Werkzeugmaschine zur spanenden Bearbeitung grosser (insbesondere langer) Bauteile, z. B. von Flugzeug-Integral-Bauteilen aus Aluminiumlegierungen. Die Maschine umfasst einen zwischen einem Maschinenbett und einer oberen Führung entlang einer geraden Bahn linear verfahrbaren Ständer, an dem seitlich ein Bearbeitungskopf angeordnet ist, welcher entlang mehrerer Achsen bewegbar ist. Entlang der Bahn ist mindestens ein klappbarer Aufspanntisch angeordnet. Die Werkstücke werden zur Bearbeitung mittels des Aufspanntisches aus einer waagrechten Bereitstellungsposition in eine senkrechte Bearbeitungsposition gebracht. Falls nebeneinander mehrere voneinander unabhängige Aufspanntische vorgesehen sind, kann ein Werkstück bearbeitet werden, während ein fertig bearbeitetes Werkstück in der waagerechten Werkstückwechselstellung des Aufspanntisches gegen ein neues Werkstück ausgewechselt wird. So können Totzeiten vermieden werden.

Wird ein langes Werkstück bearbeitet, so werden dadurch sämtliche Aufspanntische belegt. Der Werkstückwechsel erfolgt also auch in diesem Fall wieder auf die herkömmliche Weise, während die Werkzeugmaschine still steht. Eine Verringerung der Stillstandszeiten und dadurch eine Erhöhung der Leistungsfähigkeit ist bei ausgedehnten Werkstücken nicht möglich.

Die WO 02/094500 (De Moliner) betrifft eine Bearbeitungsstation zum Bearbeiten von Werkstücken. An einer längs einer horizontalen Bahn verfahrbaren vertikalen Säule ist ein Schlitten vertikal verfahrbar angeordnet; an diesem Schlitten ist rotierbar ein Gabelarm montiert, an welchem wiederum ein Maschinenkopf angeordnet ist, welcher zwischen den Gabeln drehbar ist, so dass z. B. mehrere Werkzeugköpfe eingesetzt werden können. Wahlweise kann der Werkzeugkopf eine weitere Bewegung senkrecht zur vertikalen Säule und senkrecht zur horizontalen Bahn ausführen. Entlang mehrerer horizontaler Führungsbänke, welche senkrecht zur horizontalen Bahn der vertikalen Säule angeordnet sind, sind Schlitten verfahrbar angeordnet. Auf diesen Schlitten sind Einspannvorrichtungen für die zu bearbeitenden Werkstücke angebracht. Zur Bearbeitung können Werkstücke mit Hilfe der Schlitten und weiterer Freiheitsgrade der Einspannvorrichtungen in eine für die Bearbeitung durch den Maschinenkopf günstige Position verfahren werden. Während das Werkstück auf einem der Schlitten bearbeitet wird, können die anderen Schlitten mit neuen Werkstücken beschickt werden.

Die dargestellte Station ermöglicht ein flexibles Handling der zu bearbeitenden Werkstücke. Sie weist aber einen komplexen Aufbau auf und ist zur Bearbeitung ausgedehnter und schwerer Werkstücke wenig geeignet.

### Darstellung der Erfindung

Aufgabe der Erfindung ist es, eine dem eingangs genannten technischen Gebiet zugehörende Werkzeugmaschine mit einfachem Aufbau und erhöhter Leistungsfähigkeit zu schaffen.

Die Lösung der Aufgabe ist durch die Merkmale des Anspruchs 1 definiert. Gemäss der Erfindung ist eine erste der Einspannvorrichtungen auf einer ersten Seite der geraden Bahn angeordnet und eine zweite der Einspannvorrichtungen ist auf einer zweiten Seite der geraden Bahn angeordnet, welche der ersten Seite gegenüberliegt. Der Werkzeugkopf ist so positionierbar, dass er wahlweise ein erstes der mindestens zwei Werkstücke in der ersten Einspannvorrichtung oder ein zweites der mindestens zwei Werkstücke in der zweiten Einspannvorrichtung bearbeiten kann.

Durch die Anordnung zweier Einspannvorrichtungen auf den beiden Seiten der geraden Bahn und die entsprechende Positionierbarkeit des Werkzeugkopfs wird eine Möglichkeit geschaffen, zwei lange Werkstücke unabhängig voneinander in Bearbeitungspositionen anzuordnen. Solange eines der Werkstücke auf einer Seite der Bahn bearbeitet wird, kann das Werkstück auf der anderen Seite der Bahn ausgewechselt oder für weitere Bearbeitungsschritte neu positioniert werden. Sobald die Bearbeitung des ersten Werkstücks durchgeführt worden ist, kann der Werkzeugkopf neu positioniert werden und die Bearbeitung des zweiten Werkstücks unmittelbar beginnen. Die Stillstandszeit beschränkt sich auf die Neupositionierung des Werkzeugkopfs und ist gegenüber der Totzeit beim Auswechseln eines ausgedehnten Werkstücks vernachlässigbar.

Mit Vorteil ist der Maschinenturm um eine vertikale Achse um mindestens 180° drehbar. Dadurch ändert ein am Maschinenturm angeordneter Werkzeugkopf seine Position und Orientierung so, dass das Werkstück auf der jeweils anderen Seite bearbeitet werden kann. Beide Werkstücke können symmetrisch von demselben Werkzeugkopf auf dieselbe Art und Weise erreicht werden. Diese Ausführung ermöglicht eine Bearbeitung eines gegenüberliegenden Werkstücks unabhängig von der Bewegbarkeit des Werkzeugkopfs und gewährt eine gute Abstützung des Werkzeugkopfs. Sie ist besonders dann vorteilhaft, wenn der Maschinenkopf entlang eines wesentlichen Teils des Maschinenturms geführt ist, z. B. damit er vertikal verschoben werden kann. Falls Bearbeitungsschritte, wie z. B. Bohren oder Schneiden, mit Vorteil in Achsrichtung des Werkzeugkopfs ausgeführt werden, kann die Werkzeugmaschine auch so ausgebildet sein, dass die Bearbeitung erfolgen kann, wenn der Maschinenturm eine Zwischenstellung zwischen 0° und 180° einnimmt oder um mehr als 180° gedreht ist.

Andernfalls kann auch lediglich ein oberer Teil des Maschinenturms, an welchem der Werkzeugkopf angeordnet und geführt ist, um eine vertikale Achse um 180° drehbar sein.

Alternativ kann der Werkzeugkopf um eine horizontale Achse um mindestens 180° schwenkbar sein. Falls der Werkzeugkopf entlang einer horizontalen Achse arbeitet oder symmetrisch zu einer horizontalen Achse bewegbar ist, ermöglicht eine solche Schwenkbewegung um eine horizontale Achse parallel zur geraden Bahn gleichermassen die Bearbeitung von Werkstücken auf beiden Seiten der geraden Bahn. Weil beim Neupositionieren des Werkzeugkopfs nicht der ganze Maschinenturm gedreht werden muss, wird die zu bewegende Masse stark verringert. Falls Bearbeitungsschritte, wie z. B. Bohren oder Schneiden, mit Vorteil in Achsrichtung des Werkzeugkopfs ausgeführt werden, kann die Werkzeugmaschine auch so ausgebildet sein, dass die Bearbeitung erfolgen kann, wenn der Werkzeugkopf eine Zwischenstellung zwischen 0° und 180° einnimmt oder um mehr als 180° geschwenkt ist.

Mit Vorteil weist der Werkzeugkopf eine kartesische Kinematik auf, insbesondere ist er so am Maschinenturm angeordnet, dass er um drei aufeinander senkrecht stehende Rotationsachsen drehbar ist. Ein solcher Werkzeugkopf bietet grösstmögliche Flexibilität, weil er gegenüber dem Werkstück jede beliebige Orientierung einnehmen kann. Die Positionierbarkeit des Werkzeugkopfs ergibt sich durch die Verschiebung entlang der geraden Bahn, welche eine X-Achse definiert sowie gegebenenfalls durch eine vertikale Verschiebung (Z-Richtung) entlang des Maschinenturms und durch eine horizontale Verschiebung quer zur X-Achse (Y-Richtung), wenn der Werkzeugkopf an einem entsprechend verfahrbaren Ausleger angeordnet ist.

Falls leichtere Arbeiten ausgeführt werden sollen, ist der Maschinenturm mit Vorteil freistehend auf einer Führung, welche der geraden Bahn entspricht, gelagert. Leichtere Arbeiten beinhalten insbesondere Bohren, Räumen, Nieten, Schrauben, Härten oder Schweissen, bei welchen das aufgrund der Kraft zwischen Werkzeugkopf und Werkstück auftretende Drehmoment leicht vom Maschinenturm nach unten auf die Führung übertragen werden kann. Die Führung ist z. B. eine Schiene, auf welcher der Maschinenturm über Rollen fahrbar gelagert ist.

Zur Ausführung schwererer Arbeiten ist der Maschinenturm vorzugsweise zwischen einer unteren Führung, welche der geraden Bahn entspricht und einer oberen Gegenführung, welche parallel zur unteren Führung verläuft, gelagert. Die erheblichen Drehmomente, die z. B. beim Fräsen, Entgraten oder Schneiden auftreten, können so über den Maschinenturm auf die beiden Führungen abgeleitet werden. Eine beidseitige Führung kann auch zur Ausführung leichterer Arbeiten vorteilhaft sein, indem so der Maschinenturm schlanker und folglich leichter konstruiert werden kann als bei einer einseitigen Führung, was die Verschiebung des Turms entlang der geraden Bahn und das Drehen des Turms um seine Vertikalachse erleichtert. Durch die verbesserte Dynamik ergeben sich geringere Verzögerungen beim Drehen oder Verschieben des Maschinenturms.

Ein Verfahren zum Bearbeiten von mindestens zwei Werkstücken, insbesondere mit einer Werkzeugmaschine wie oben beschrieben, die entlang einer geraden Bahn verschiebbar ist, umfasst folgende Schritte:
a) Einspannen eines ersten der mindestens zwei Werkstücke in eine erste Einspannvorrichtung auf einer ersten Seite der geraden Bahn;
b) Positionieren eines Werkzeugkopfs der Werkzeugmaschine, so dass das erste Werkstück bearbeitet werden kann;
c) Bearbeiten des ersten Werkstücks;
d) gleichzeitig Einspannen eines zweiten der mindestens zwei Werkstücke in eine zweite Einspannvorrichtung auf einer zweiten Seite der geraden Bahn, die der ersten Seite gegenüberliegt;
e) nach Beendigung der Bearbeitung des ersten Werkstücks Positionieren des Werkzeugkopfs, so dass das zweite Werkstück bearbeitet werden kann;
f) Bearbeiten des zweiten Werkstücks.

Vorausgesetzt, das Entfernen eines fertig bearbeiteten Werkstücks und das Einspannen eines neuen Werkstücks nimmt nicht mehr Zeit in Anspruch als die gesamte Bearbeitung eines Werkstücks, reduziert sich die Stillstandszeit der Werkzeugmaschine auf den Schritt e), welcher sehr schnell erfolgen kann. Die Neupositionierung erfolgt insbesondere durch Drehen des Maschinenturms um 180° um eine vertikale Achse oder durch Schwenken des Werkzeugkopfs um 180° um eine horizontale Achse.

Eine Werkzeugmaschine der oben beschriebenen Art, welche einen Maschinenturm aufweist, welcher entlang einer ersten geraden Bahn linear verschiebbar ist sowie einen Werkzeugkopf, der am Maschinenturm angeordnet ist und ein Werkzeug zur Bearbeitung von Werkstücken aufweist, und mit einer Einspannvorrichtung für ein Werkstück seitlich der ersten geraden Bahn, kann Mittel zum Verfahren des Maschinenturms auf eine zweite gerade Bahn auf einer bezüglich der ersten geraden Bahn gegenüberliegenden Seite der Einspannvorrichtung aufweisen. Der Werkzeugkopf ist so positionierbar, dass er das Werkstück beidseitig bearbeiten kann. Dadurch, dass mit demselben Maschinenturm, mit demselben Werkzeugkopf und demselben Werkzeug das Werkstück beidseitig bearbeitet werden kann, wird kein zweiter Maschinenturm auf der zweiten Seite des Werkstücks benötigt. Die entsprechende Werkzeugmaschine ist also einfacher aufgebaut und kostengünstiger. Eine derartige Werkzeugmaschine ist besonders bei langen Werkstücken vorteilhaft, welche nicht bezüglich des Maschinenturms so gedreht werden können, dass beide Längsseiten vom Werkzeug erreicht werden können.

Mit Vorteil weist die Werkzeugmaschine einen Schlitten zum Verfahren des Maschinenturms von der ersten geraden Bahn zur zweiten geraden Bahn auf. Ein derartiger Schlitten erfasst z. B. den Maschinenturm am einen Ende der ersten geraden Bahn, transportiert ihn quer zur Bahnrichtung seitlich am Werkstück vorbei zur zweiten geraden Bahn und gibt ihn an die zweite gerade Bahn ab. Dies führt dazu, dass der Werkzeugkopf vorerst vom Werkstück weg gerichtet ist. Durch einen um 180° um eine vertikale Achse drehbaren Maschinenturm oder einen um 180° um eine horizontale Achse schwenkbaren Werkzeugkopf wie oben angegeben wird es ermöglicht, den Werkzeugkopf auf einfache Weise so auszurichten, dass die zweite Seite des Werkstücks bearbeitet werden kann. Gegenüber z. B. einer U-förmigen Führung des Maschinenturms um das Werkstück herum ergibt sich besonders bei schmalen Werkstücken eine erhebliche Platzersparnis.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine erfindungsgemässe Werkzeugmaschine mit drehbarem Maschinenturm in perspektivischer Ansicht;
- Fig. 2A, 2B: schematische Darstellungen der Werkzeugmaschine mit drehbarem Maschinenturm und der Einspannvorrichtungen;
- Fig. 3A, 3B: schematische Darstellungen einer anderen Werkzeugmaschine mit schwenkbarem Werkzeug;
- Fig. 4: eine schematische Darstellung einer Werkzeugmaschine zum beidseitigen Bearbeiten eines Werkstücks.

Grundsätzlich sind in den Figuren gleiche Teile mit gleichen Bezugszeichen versehen.

### Wege zur Ausführung der Erfindung

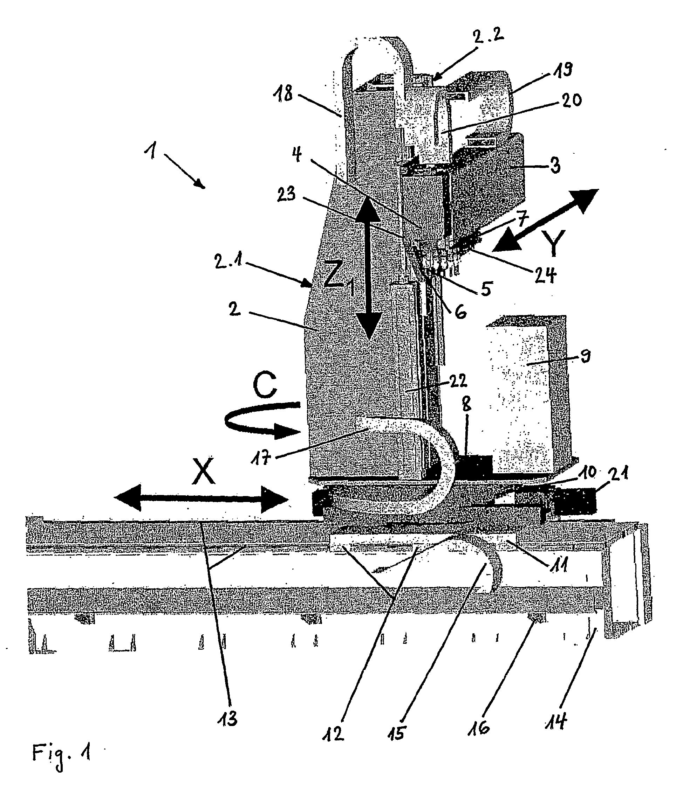

Figur 1 zeigt eine erfindungsgemässe Werkzeugmaschine. Die Maschine 1 umfasst einen vertikalen Maschinenturm 2, der einen im Wesentlichen rechteckigen Querschnitt aufweist, welcher sich gegen oben verjüngt, indem die Rückseite 2.1 im oberen Teil schräg verläuft. An der Stirnseite 2.2 des Maschinenturms 2 ist ein Werkzeugschlitten 3 angeordnet, der an einem seiner Enden ein Werkzeug 4 mit einem Bohrkopf 5 trägt. Der Bohrer des Bohrkopfs 5 ist vertikal nach unten orientiert und kann somit vertikale Bohrungen erzeugen. Der Werkzeugschlitten 3 ist horizontal entlang einer Achse Y verschiebbar auf einer Trägerplatte 6 angebracht, welche wiederum vertikal entlang einer Achse Z₁ verschiebbar an der Stirnseite 2.2 des Maschinenturms 2 gelagert ist. Dazu weist die Trägerplatte 6 auf ihrer Rückseite Schienen auf, die in entsprechenden Nuten auf der Stirnseite 2.2 des Maschinenturms 2 geführt sind.

Das Werkzeug 4 ist in Bezug auf den Werkzeugschlitten 3 entlang der Achse Z₂ auf Schienen 7 vertikal verfahrbar. Dadurch wird bei kleinen vertikalen Positionsänderungen eine Bewegung des gesamten Werkzeugschlittens 3 entlang des Maschinenturms vermieden. Der Bohrkopf 5 weist zudem einen gefederten Andrücker auf, der ebenfalls senkrecht wirkt und den Bohrkopf ans Werkstück andrückt.

Der Maschinenturm 2 steht auf einer Grundplatte 8, welche ausserdem in einem Kasten 9 eine Hydraulikeinheit sowie einen Vakuumsauger trägt. Die Grundplatte 8 wiederum ist fest mit einem Drehteller 10 verbunden, welches um eine vertikale Drehachse C drehbar auf einem Schlitten 11 angeordnet ist. Der Schlitten 11 weist aussen auf seiner Unterseite Führungselemente 12 auf, welche mit Schienen 13 auf der oberen Seite einer Maschinenführung 14 zusammenwirken. Dies ermöglicht eine Bewegung des Schlittens 11 und damit der gesamten Werkzeugmaschine entlang der geraden Bahn (Achse X), die durch die Maschinenführung 14 vorgegeben wird. Die Maschinenführung 14 wird durch ein Hohlprofil gebildet, an welchem seitlich eine flexible Energiekette 15 in einem Kanal 16 geführt ist, welcher entlang der ganzen Länge der Maschinenführung 14 verläuft.

Die Energiekette 15 ist mit einem entsprechenden Anschluss verbunden, welcher am Schlitten 11 angeordnet ist. Bei der Bewegung entlang der geraden Bahn wird je nach Richtung ein längerer oder kürzerer Abschnitt der Energiekette 15 aus dem Kanal 16 abgehoben oder in den Kanal 16 zurückgegeben. Die Energiekette 15 beinhaltet insbesondere Hydraulikschläuche, Stromkabel sowie Steuerkabel zur Versorgung und Steuerung der Bewegung des Maschinenturms 2, des Werkzeugschlittens 3 und des Werkzeugs 4. Die Energieübertragung erfolgt weiter vom Schlitten 11 zum Maschinenturm 2 über eine zweite Energiekette 17, welche mit Schläuchen und Kabeln im Innern des Maschinenturms 2 verbunden ist. Die zweite Energiekette 17 erlaubt durch ihre Flexibilität die Drehbewegung des Maschinenturms 2 um seine vertikale Drehachse C, indem sich die Energiekette 17 entsprechend mitdrehen kann und mindestens eine Drehung um 180° zulässt.

Eine weitere Energiekette 18 schafft die Verbindung zwischen dem Maschinenturm 2 und der Trägerplatte 6 des Werkzeugschlittens 3 und erlaubt deren Vertikalbewegung entlang der Achse Z₁. Abermals eine weitere Energiekette 19 verbindet die Trägerplatte 6 und den Werkzeugschlitten 3 und ist flexibel entlang der Achse Y. Eine letzte Energiekette 20 verbindet den Werkzeugschlitten 3 mit dem Werkzeug 4 beweglich entlang der Achse Z₂.

Am Schlitten 11 ist ein Antrieb 21 angeordnet, welcher die Bewegung des Schlittens 11 entlang der Maschinenführung 14 ermöglicht, indem er z. B. über ein Zahnrad mit einer Zahnstange an der Maschinenführung 14 zusammenwirkt. Die Drehbewegung des Maschinenturms 2 um seine vertikale Achse C erfolgt hydraulisch. Die Horizontal- und Vertikalbewegungen des Werkzeugschlittens 3 sind über NC-Achsen gesteuert. Zum Lastenausgleich ist an der Aussenseite des Maschinenturms 2 ein Druckzylinder 22 angeordnet, welcher über eine Schubstange 23 mit der Trägerplatte 6 für den Werkzeugschlitten 3 verbunden ist. Das Werkzeug 4 hingegen umfasst für den Bohrer 5 einen eigenen Antrieb mit Elektromotor.

An der Unterseite des Werkzeugschlittens 3 ist eine Werkzeugwechselvorrichtung 24 angeordnet, welche das automatische Auswechseln des Bohrkopfs 5 durch in der Werkzeugwechselvorrichtung 24 vorrätige Ersatzbohrer erlaubt.

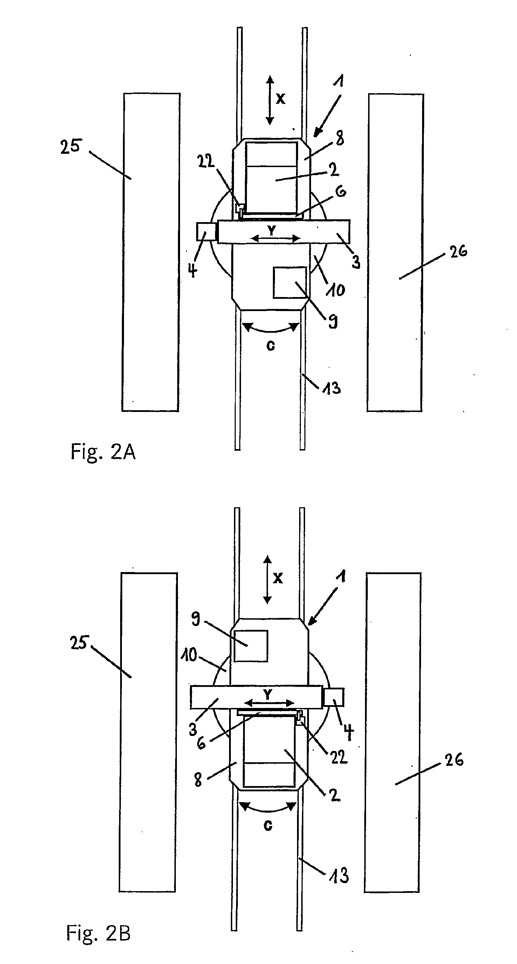

Die Figuren 2A und 2B sind schematische Darstellungen der Werkzeugmaschine und der Einspannvorrichtungen von oben gesehen. Die Einspannvorrichtungen 25, 26 erstrecken sich beidseitig längs der Schienen 13 (bzw. der Maschinenführung). Ihre Länge ist geringfügig kürzer als die Länge der Schienen 13 und so gewählt, dass das Werkzeug 4 den gesamten Bereich jeweils einer Einspannvorrichtung 25, 26 erreichen kann. In Figur 2A ist der Maschinenturm 2 so gedreht, dass ein Werkstück bearbeitet werden kann, welches in der ersten Einspannvorrichtung 25 eingespannt ist. Zur Bearbeitung kann das Werkzeug durch Anheben des Werkzeugschlittens 3 mit seiner Trägerplatte 6 gehoben und gesenkt, durch Verschieben des Werkzeugschlittens 3 bezüglich der Trägerplatte entlang der Achse Y zum Werkstück hin und vom Werkstück weg bewegt und durch Verschieben der gesamten Werkzeugmaschine 1 entlang der geraden Bahn auf den Schienen 13 dem Werkstück entlang verschoben werden (Achse X).

Soll nun ein Werkstück auf der zweiten Einspannvorrichtung 26 bearbeitet werden, wird der Maschinenturm 2 mittels des Drehtellers 10 um seine vertikale Drehachse C um 180° gedreht, so dass er die in Figur 2B gezeigte Stellung einnimmt. Dazu wird der Maschinenturm 2 hydraulisch von einem unteren Teil des Drehtellers 10 abgehoben, um 180° gedreht und wieder abgesetzt. Zahnkränze am unteren und oberen Teil des Drehtellers 10 greifen ineinander und führen zu einer zuverlässigen Fixierung und Drehsicherung des Maschinenturms 2 bezüglich seiner vertikalen Achse.

Werkstücke in beiden Einspannvorrichtungen 25, 26 sind auf genau dieselbe Art bearbeitbar, die Einspannvorrichtungen sind absolut gleichwertig. Als Einspannvorrichtungen 25, 26 können sämtliche bekannten Vorrichtungen verwendet werden, die für lange Werkstücke geeignet sind, z. B. feste oder schwenk- bzw. verfahrbare Aufspanntische, Palettenträger, Klemmbacken etc.. Ihre Aufspannfläche kann sowohl vertikal wie horizontal oder auch schräg angeordnet sein. An beiden Seiten der Bahn können zudem unterschiedliche Einspannvorrichtungen zur Aufnahme unterschiedlicher Werkstücke vorgesehen werden.

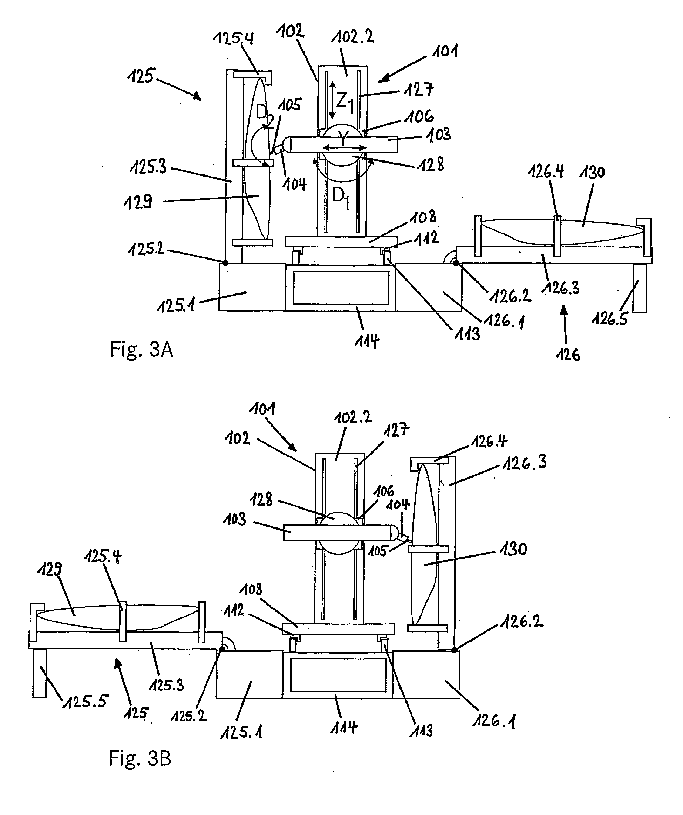

Die Figuren 3A, 3B zeigen schematische Darstellungen einer anderen Werkzeugmaschine mit einem schwenkbarem Werkzeug. Die Maschine 101 umfasst einen Maschinenturm 102, der auf einer Grundplatte 108 angeordnet ist. Die Grundplatte 108 weist an ihrer Unterseite Führungselemente 112 auf, welche mit Schienen 113 zusammenwirken, die auf der Oberseite einer Maschinenführung 114 angeordnet sind, die eine gerade Bahn definiert. Dadurch lässt sich die Grundplatte 108 der Werkzeugmaschine 101 zusammen mit dem Maschinenturm 102 entlang der geraden Bahn horizontal verschieben.

An der Stirnseite 102.2 des Maschinenturms 102 sind zwei vertikale Schienen 127 angeordnet, auf welchen eine Trägerplatte 106 entlang der Achse Z₁ vertikal verschiebbar ist. An der Trägerplatte 106 ist ein Drehteller 128 drehbar montiert, auf welchem ein Werkzeugschlitten 103 linear verschiebbar (Achse Y) angeordnet ist. Der Drehteller 128 ist bezüglich der Trägerplatte 106 um eine horizontale Drehachse D, schwenkbar. An einem Ende des Werkzeugschlittens 103 ist ein Werkzeug 104 um eine horizontale Achse D₂ schwenkbar angeordnet, so dass die Orientierung des Bohrkopfs 105 variiert werden kann, z. B. damit Bohrungen mit verschiedenen Ausrichtungen möglich sind. Das Werkzeug 104 kann auch über ein Kugelgelenk am Werkzeugschlitten 103 angebracht sein, so dass die Orientierung des Bohrkopfs 105 innerhalb des dem Werkstück zugewandten Halbraums frei wählbar ist.

In der Figur 3A wird durch das Werkzeug 104 ein Werkstück 129 bearbeitet, welches in einer Einspannvorrichtung 125 eingespannt ist. Die Einspannvorrichtung 125 weist eine Basisplatte 125.1 auf, deren obere Fläche ungefähr auf der Höhe der Maschinenführung 114 liegt. Daran ist um eine horizontale Drehachse 125.2 ein vertikaler Träger 125.3 angeordnet. Auf diesen Träger ist mittels verschiedener Befestigungselemente 125.4 das Werkstück 129 vertikal aufgespannt.

Die zweite Einspannvorrichtung 126 ist in der Figur 3A in ihrer heruntergeklappten Stellung dargestellt. Diese Stellung erlaubt ein einfaches Be- und Entladen der Einspannvorrichtung 126 mit einem Werkstück 130 und ergibt sich durch Herunterklappen des Trägers 126.3 um die Drehachse 126.2. In der horizontalen Lage wird der Träger 126.3 zur Stabilisierung auf eine Stütze 126.5 aufgelegt. Die klappbaren Einspannvorrichtungen 125, 126 können so ausgebildet sein, dass sie sich auch in einer Schräglage zwischen horizontaler und vertikaler Lage feststellen lassen, so dass entsprechende Werkstücke besser durch die Werkzeugmaschine 101 bearbeitet werden können.

Die Figur 3B zeigt die Bearbeitung des anderen Werkstücks 130. Dazu wird die zweite Einspannvorrichtung 126 hochgeklappt und der Werkzeugschlitten 103 mittels des Drehtellers 128 um 180° um die Drehachse D, geschwenkt. Durch die Beweglichkeit des Werkzeugs 104 mit dem Bohrkopf 105 ist es auf der zweiten Arbeitsseite gleichermassen möglich, das zweite Werkstück 130 zu bearbeiten, währenddessen das erste Werkstück 129 aus der ersten Einspannvorrichtung 125 entfernt und ein neues Werkstück dort eingespannt werden kann.

Auch diese zweite Werkzeugmaschine 101 mit schwenkbarem Werkzeug lässt sich mit einer Vielzahl verschiedener Einspannvorrichtungen kombinieren.

Anhand der Figuren 3A und 3B wird auch das erfindungsgemässe Verfahren dargestellt. Zur Bearbeitung von Werkstücken 129, 130 mit der erfindungsgemässen Werkzeugmaschine 101 wird zunächst ein erstes Werkstück 129 in die erste Einspannvorrichtung 125 eingespannt. Sobald dies abgeschlossen ist, kann das Werkzeug 104 so positioniert werden, dass das erste Werkstück 129 bearbeitet werden kann. Während dessen Bearbeitung erfolgt das Einspannen des zweiten Werkstücks 130 in die zweite Einspannvorrichtung 126 auf der Gegenseite der geraden Bahn. Ist das erste Werkstück 129 fertig bearbeitet, wird das Werkzeug 104 mitsamt dem Werkzeugschlitten 103 auf dem Drehteller 128 um 180° geschwenkt. Dies bringt das Werkzeug 104 in eine Position, in der damit das zweite Werkstück 130 bearbeitet werden kann. Das Werkstück 129 in der ersten Einspannvorrichtung 125 kann durch ein neues Werkstück ausgewechselt werden.

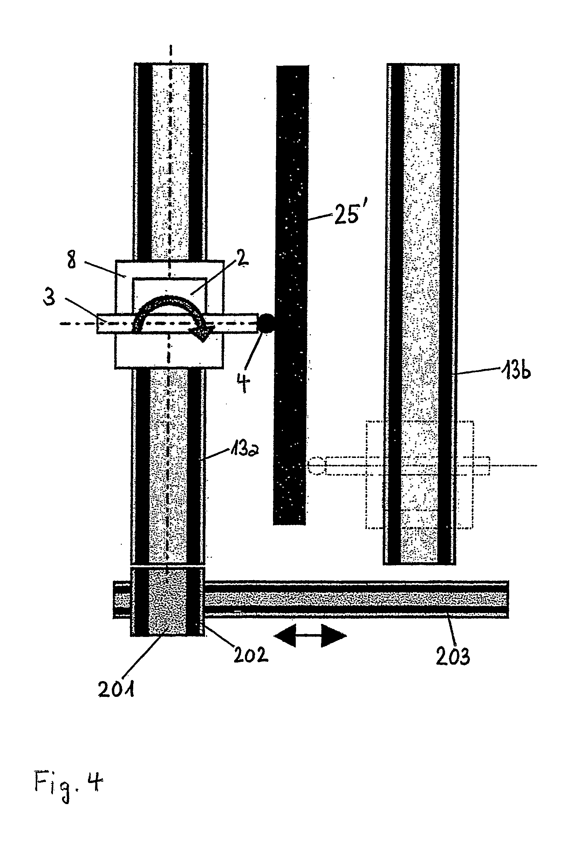

Die Figur 4 ist eine schematische Darstellung einer Werkzeugmaschine zum beidseitigen Bearbeiten eines Werkstücks, die nicht unter dem Schutz von Anspruch 1 fällt. Der Maschinenturm 2, welcher auf der Grundplatte 8 getragen ist und einen Werkzeugschlitten 3 mit einem Werkzeug 4 aufweist, entspricht dem oben dargestellten, um seine vertikale Achse drehbaren Maschinenturm. Die Werkzeugmaschine ist entlang einer ersten geraden Bahn auf Schienen 13a entlang des Werkstücks 25' linear verschiebbar. An einem Ende der ersten Bahn kann der Maschinenturm 2 mitsamt Grundplatte 8 weiter auf einen Schlitten 201 verfahren werden. Dazu weist der Schlitten 201 Schienen 202 auf, welche bezüglich ihrer Form und Anordnung den Schienen 13a entsprechen.

Sobald der Maschinenturm 2 auf den Schlitten 201 verfahren worden ist, kann der Schlitten 201 auf Schienen 203 quer zur ersten Bahn 13a am Werkstück 25' vorbei an eines der Enden einer zweiten geraden Bahn verschoben werden, welche durch Schienen 13b gebildet wird. Die zweite gerade Bahn ist parallel zur ersten Bahn, liegt aber auf der dem Werkstück gegenüberliegenden Seite. Nachdem der Maschinenturm 2 von den Schienen 13b der zweiten Bahn aufgenommen worden ist, weist der Werkzeugschlitten 3 mit dem Werkzeug 4 vorerst vom Werkstück weg. Durch eine 180°-Drehung des Maschinenturms 2 um seine vertikale Achse wird also das Werkzeug 4 so positioniert, dass die zweite Seite des Werkstücks 25' bearbeitet werden kann.

Anstelle eines um 180° um seine vertikale Achse drehbaren Maschinenturms kann die Werkzeugmaschine wiederum - wie oben dargestellt - ein um 180° um eine horizontale Achse schwenkbares Werkzeug aufweisen.

Aus der Figur 4 ist deutlich ersichtlich, dass die dargestellte Vorrichtung wesentlich weniger Platz benötigt als eine U-förmige Führung für den Maschinenturm, welche um das (schmale) Werkstück herum führt. Eine U-förmige Führung bedingt nämlich einen gewissen Mindestradius der Schienen, auf welchen der Maschinenturm verfahren wird. Dieser führt zu einer gewissen Mindestausdehnung in der Verlängerung des Werkstücks, welche besonders bei ohnehin langen Werkstücken nicht gewünscht ist. Die Führung des Maschinenturms entlang einer gekrümmten Strecke ist zudem konstruktiv aufwendiger, indem sie eine erheblich kompliziertere Lagerung des Maschinenturms auf den Schienen bedingt.

Das Werkzeug zur Bearbeitung der Werkstücke kann unterschiedliche Freiheitsgrade aufweisen. Es kann insbesondere so am Maschinenturm gelagert sein, dass es in X-, Y- und Z-Richtung verschiebbar und um drei zueinander senkrecht stehende Rotationsachsen drehbar ist. Ein derartig gelagerter Universalkopf kann in einem gewissen Bereich bezüglich des Maschinenturms sämtliche Positionen und Orientierungen einnehmen. Das Werkzeug kann ein Räum-, Fräs-, Entgrat-, Niet-, Schraub-, Härt-, Löt- oder Schweisswerkzeug sein, wobei zum Schneiden, Härten oder Schweissen z. B. auch Laserquellen oder Elektronenstrahlquellen möglich sind.

Falls der Maschinenturm kontinuierlich bezüglich seiner Vertikalachse verstellbar sein soll, kann anstelle einer Hydraulik auch z. B. eine NC-Achse zum Drehen des Maschinenturms vorgesehen werden.

Für schwere Arbeiten, bei denen eine grosse Kraft zwischen Werkzeug und Werkstück übertragen wird, kann eine zweite Führung parallel zur ersten Maschinenführung vorgesehen werden, welche oberhalb der Maschine angeordnet ist. Bei einem drehbaren Maschinenturm ist dieser auch in der oberen Führung drehbar gelagert, im Fall eines schwenkbaren Werkzeugs wird dieses für die Schwenkbewegung entlang des Maschinenturms in einen Höhenbereich verfahren, in dem weder eine Kollision mit der unteren noch mit der oberen Führung auftritt.

Die Werkzeugmaschine kann zusammen mit den beiden Einspannvorrichtungen bzw. mit den beiden Bahnführungen auf einer gemeinsamen Fundamentplatte oder auf einem gemeinsamen Rahmen angeordnet werden, so dass die Stabilität sowohl der Maschinenführung als auch der Einspannvorrichtungen noch verbessert wird.

Zusammenfassend ist festzustellen, dass die Erfindung eine Werkzeugmaschine sowie ein Verfahren zum Bearbeiten von mindestens zwei Werkstücken mit erhöhter Leistungsfähigkeit schafft.

## Patentansprüche

1. Werkzeugmaschine (1; 101) mit einem Maschinenturm (2; 102), der entlang einer geraden Bahn (13; 113) linear verschiebbar ist, mit einem Werkzeugkopf (4; 104), der am Maschinenturm (2; 102) angeordnet ist und ein Werkzeug (5; 105) zur Bearbeitung von Werkstücken aufweist, und mit mindestens zwei Einspannvorrichtungen (25, 26; 125, 126) für mindestens zwei Werkstücke, **dadurch gekennzeichnet, dass** eine erste der Einspannvorrichtungen (25; 125) auf einer ersten Seite der geraden Bahn (13; 113) angeordnet ist, dass eine zweite der Einspannvorrichtungen (26; 126) auf einer zweiten Seite der geraden Bahn (13; 113) angeordnet ist, welche der ersten Seite gegenüberliegt und dass der Werkzeugkopf (4; 104) so positionierbar ist, dass er wahlweise ein erstes der mindestens zwei Werkstücke in der ersten Einspannvorrichtung (25; 125) oder ein zweites der mindestens zwei Werkstücke in der zweiten Einspannvorrichtung (26; 126) bearbeiten kann.

2. Werkzeugmaschine nach Anspruch 1, **dadurch gekennzeichnet, dass** der Maschinenturm (2) um eine vertikale Achse um mindestens 180° drehbar ist.

3. Werkzeugmaschine nach Anspruch 1 oder 2, **dadurch gekennzeichnet, dass** der Werkzeugkopf (104) um eine horizontale Achse um mindestens 180° schwenkbar ist.

4. Werkzeugmaschine nach einem der Ansprüche 1 bis 3, **dadurch gekennzeichnet, dass** der Werkzeugkopf (4; 104) eine kartesische Kinematik aufweist, dass er insbesondere um drei aufeinander senkrecht stehende Rotationsachsen drehbar angeordnet ist.

5. Werkzeugmaschine nach einem der Ansprüche 1 bis 4, **dadurch gekennzeichnet, dass** der Maschinenturm (2; 102) freistehend auf einer Führung (14; 114), welche der geraden Bahn entspricht, gelagert ist.

6. Werkzeugmaschine nach einem der Ansprüche 1 bis 4, **dadurch gekennzeichnet, dass** der Maschinenturm zwischen einer unteren Führung, welche der geraden Bahn entspricht, und einer oberen Gegenführung, welche parallel zur unteren Führung verläuft, gelagert ist.

7. Verfahren zum Bearbeiten von mindestens zwei Werkstücken mit einer Werkzeugmaschine insbesondere nach Anspruch 1, die entlang einer geraden Bahn verschiebbar ist, **gekennzeichnet durch** folgende Schritte:
a) Einspannen eines ersten der mindestens zwei Werkstücke in eine erste Einspannvorrichtung auf einer ersten Seite der geraden Bahn;
b) Positionieren eines Werkzeugkopfs der Werkzeugmaschine, so dass das erste Werkstück bearbeitet werden kann;
c) Bearbeiten des ersten Werkstücks;
d) gleichzeitig Einspannen eines zweiten der mindestens zwei Werkstücke in eine zweite Einspannvorrichtung auf einer zweiten Seite der geraden Bahn, die der ersten Seite gegenüberliegt;
e) nach Beendigung der Bearbeitung des ersten Werkstücks Positionieren des Werkzeugkopfs, so dass das zweite Werkstück bearbeitet werden kann;
f) Bearbeiten des zweiten Werkstücks.

8. Verfahren nach Anspruch 7, **dadurch gekennzeichnet, dass** zum Positionieren des Werkzeugkopfs ein Maschinenturm der Werkzeugmaschine um 180° um eine vertikale Achse gedreht wird.

9. Verfahren nach Anspruch 7, **dadurch gekennzeichnet, dass** zum Positionieren des Werkzeugkopfs der Werkzeugkopf um 180° um eine horizontale Achse geschwenkt wird.

## Claims

1. Machine tool (1; 101) having a machine tower (2; 102) which can be displaced in a linear manner along a straight path (13; 113), and having a tool head (4; 104) which is arranged on the machine tower (2; 102) and which has a tool (5; 105) for processing workpieces, and having at least two clamping devices (25, 26; 125, 126) for at least two workpieces, **characterised in that** a first of the clamping devices (25; 125) is arranged at a first side of the straight path (13; 113), **in that** a second of the clamping devices (26; 126) is arranged at a second side of the straight path (13; 113) opposite the first side, and **in that** the tool head (4; 104) can be positioned in such a manner that it can selectively process a first of the at least two workpieces in the first clamping device (25; 125) or a second of the at least two workpieces in the second clamping device (26; 126).

2. Machine tool according to claim 1, **characterised in that** the machine tower (2) can be rotated through at least 180° about a vertical axis.

3. Machine tool according to claim 1 or 2, **characterised in that** the tool head (104) can be pivoted through at least 180° about a horizontal axis.

4. Machine tool according to any one of claims 1 to 3, **characterised in that** the tool head (4; 104) has cartesian kinematics, **in that** it is in particular arranged so as to be able to be rotated about three mutually perpendicular axes of rotation.

5. Machine tool according to any one of claims 1 to 4, **characterised in that** the machine tower (2; 102) is supported freely on a guide (14; 114) which corresponds to the straight path.

6. Machine tool according to any one of claims 1 to 4, **characterised in that** the machine tower is supported between a lower guide which corresponds to the straight path and an upper counter guide which extends parallel with the lower guide.

7. Method for processing at least two workpieces using a machine tool, in particular according to claim 1, which can be displaced along a straight path, **characterised by** the following steps:
a) clamping a first of the at least two workpieces in a first clamping device at a first side of the straight path;
b) positioning a tool head of the machine tool so that the first workpiece can be processed;
c) processing the first workpiece;
d) simultaneously clamping a second of the at least two workpieces in a second clamping device at a second side of the straight path opposite the first side;
e) after finishing the processing of the first workpiece, positioning the tool head so that the second workpiece can be processed;
f) processing the second workpiece.

8. Method according to claim 7, **characterised in that**, in order to position the tool head, a machine tower of the machine tool is rotated through 180° about a vertical axis.

9. Method according to claim 7, **characterised in that**, in order to position the tool head, the tool head is pivoted through 180° about a horizontal axis.

## Revendications

1. Machine-outil (1 ;101) avec une tour de machine (2 ;102) qui est déplaçable linéairement le long d'une voie droite (13 ; 113) avec une tête d'outil (4;104), qui est disposée sur la tour de machine (2 ;102) et un outil (5 ;105) pour l'usinage de pièces, et avec au moins deux dispositifs de fixation ou de serrage (25,26 ;125 ;126) pour au moins deux pièces à usiner,
**caractérisée en ce qu'**un premier des dispositifs de fixation ou de serrage (25 ;125) est disposé sur un premier côté de la voie droite (13 ;113), **en ce qu'**un second des dispositifs de fixation ou de serrage (26 ;126) est disposé sur un second côté de la voie droite (13 ;113), qui est opposé au premier côté et **en ce que** la tête d'outil (4 ;104) peut être positionnée de façon à pouvoir usiner sélectivement une premières des au moins deux pièces à usiner dans le premier dispositif de fixation ou de serrage(25 ;125) ou une seconde des au moins deux pièces à usiner dans le second dispositif de fixation ou de serrage (26 ;126).

2. Machine-outil selon la revendication 1, **caractérisée en ce que** la tour de machine (2) est rotative d'au moins 180° autour d'un axe vertical.

3. Machine-outil selon la revendication 1 ou 2, **caractérisée en ce que** la tête d'outil (104) est pivotante d'au moins 180° autour d'un axe horizontal.

4. Machine-outil selon l'une des revendications 1 à 3, **caractérisée en ce que** la tête d'outil (4 ; 104) présente une cinétique cartésienne, **en ce qu'**elle est disposée en particulier de façon rotative autour de trois axes de rotation disposés verticalement l'un au-dessus de l'autre.

5. Machine-outil selon l'une des revendications 1 à 4, **caractérisée en ce que** la tour de machine (2 ; 102) est logée librement sur un guidage (14 ;114) qui correspond à la voie droite.

6. Machine-outil selon l'une des revendications 1 à 4, **caractérisée en ce que** la tour de machine est logée entre un guidage inférieur qui correspond à la voie droite et un contre-guidage supérieur qui s'étend parallèlement au guidage inférieur.

7. Procédé pour l'usinage d'au moins deux pièces avec une machine-outil en particulier selon la revendication 1, qui est déplaçable le long d'une voie droite, **caractérisé par** les étapes suivantes consistant à :
a) fixer une premières des au moins deux pièces à usiner dans un premier dispositif de fixation ou de serrage sur un premier côté de la voie droite ;
b) positionner une tête d'outil de la machine-outil de façon à pouvoir usiner la première pièce ;
c) usiner la première pièce ;
d) fixer simultanément la seconde des au moins deux pièces à usiner sur un second côté de la voie droite, qui correspond au premier côté ;
e) à la fin de l'usinage de la première pièce, positionner la tête d'outil de façon à pouvoir usiner la seconde pièce ;
f) usiner la seconde pièce.

8. Procédé selon la revendication 7, **caractérisé en ce que** pour le positionnement de la tête d'outil, une tour de machine de la machine-outil machine est mise en rotation de 180° autour d'un axe vertical.

9. Procédé selon la revendication 7, **caractérisé en ce que** pour le positionnement de la tête d'outil, la tête d'outil est pivotée de 180° par rapport à un axe horizontal.
